# EUROPÄISCHE PATENTSCHRIFT

(11) **EP 2 084 430 B1**
(45) Veröffentlichungstag und Bekanntmachung des Hinweises auf die Patenterteilung: **13.01.2010**
(21) Anmeldenummer: 07821153.9
(22) Anmeldetag: 10.10.2007
(51) Int. Cl.: F16H 37/04, F16H 57/02, B60K 17/344

(54) **GETRIEBE EINES VON EINEM MOTOR ANTREIBBAREN FAHRZEUGES**
GEARBOX OF A VEHICLE WHICH CAN BE DRIVEN BY AN ENGINE
TRANSMISSION D'UN VÉHICULE POUVANT ÊTRE ENTRAÎNÉ PAR UN MOTEUR

(30) Priorität: 24.10.2006 DE 102006050000
(43) Veröffentlichungstag der Anmeldung: 05.08.2009
(73) Patentinhaber: ZF Friedrichshafen AG, 88038 Friedrichshafen (DE)
(72) Erfinder: KERSCHBAUMMAYR, Alfred, A-4400 Steyr (AT)
(86) Internationale Anmeldenummer: PCT/EP2007/060785
(87) Internationale Veröffentlichungsnummer: WO 2008/049732

(56) Entgegenhaltungen:
- EP-A- 0 552 673
- DE-A1- 2 645 907
- DE-A1- 3 217 993

## Beschreibung

Die Erfindung betrifft ein Getriebe eines von einem Motor antreibbaren Fahrzeuges nach dem Oberbegriff des Patentanspruches 1.

Gattungsgemäße Getriebe werden in Land- und Bauwirtschaft eingesetzt, sie sind als so genannte Gruppengetriebe ausgebildet und weisen beispielsweise ein Vorschaltgetriebe (erste Gruppe), ein Hauptgetriebe (zweite Gruppe) und ein Kriechganggetriebe (dritte Gruppe) sowie möglicherweise noch ein Nachschaltgetriebe (vierte Gruppe) auf. Das Hauptgetriebe ist als Schaltgetriebe ausgebildet, dessen Gangzahl durch das Vor- und Nachschaltgetriebe jeweils verdoppelt werden kann. Dadurch ergibt sich eine kompakte Bauweise. Durch das Kriechganggetriebe wird zusätzlich eine sehr niedrige Untersetzung erreicht. Die Getriebegruppen, kurz Gruppen genannt, sind hintereinander angeordnet, wobei bekannte Kriechganggetriebe in das Vorschalt- oder Hauptgetriebe integriert sind.

Durch die DE 26 45 907 B2 wurde ein Zahnräderwechselgetriebe bekannt, welches aus drei hintereinander angeordneten Getriebegruppen besteht, nämlich einem motorseitigen Feinstufen- oder Vorschaltgetriebe, einem mittleren Kriechganggetriebe und einem abtriebsseitigen Schaltgetriebe. Das Kriechganggetriebe ist dabei koaxial zur Ausgangswelle des Vorschaltgetriebes und zur Eingangswelle des Schaltgetriebes angeordnet. Diese Bauweise benötigt ein relativ großen axialen Bauraum, der nicht in jedem Fahrzeug zur Verfügung steht.

Durch die DE 32 17 993 A1 wurde ein Getriebe für Land- oder Baurfahrzeuge mit quer zur Motoreingangswelle verlaufenden Getriebenwellen bekannt. Das bekannte Getriebe setzt sich aus einem Planetenvorschaltgetriebe, einem Planeten-Kriechganggetriebe, einem Wechselgetriebe sowie ausgangsseitigen Stirnraddifferenzialgetrieben zusammen. Das wahlweise zuschaltbare Kriechganggetriebe erlaubt eine zusätzliche Untersetzung von ca. 1 : 3,3 und ist als einstufiges Planetengetriebe ausgebildet, welches mit dem Planetenvorschaltgetriebe integriert und in einem gemeinsamen Gehäuse angeordnet ist. Aus der EP 0552673A1 ist ein Getriebe nach dem Oberbegriff des Anspruchs 1 bekannt.

Es ist Aufgabe der Erfindung, ein Getriebe der eingangs genannten Art derart zugestalten, dass ein Haupt- oder Grundgetriebe bedarfsweise mit einem Kriechganggetriebe bestückt werden kann, wobei gleichzeitig eine kompakte Bauweise, insbesondere in axialer Richtung erreicht werden soll.

Die Aufgabe der Erfindung wird durch die Merkmale des Patentanspruches 1 gelöst. Vorteilhafte Ausgestaltungen ergeben sich aus den Unteransprüchen.

Erfindungsgemäß ist vorgesehen, dass das Kriechganggetriebe als Zusatzgetriebe ausgebildet und bedarfsweise an das Hauptgetriebe anbaubar, d. h. zwischen erste und zweite Getriebegruppe schaltbar ist. Dabei ist das Zusatzgetriebe seitlich an das Gehäuse anflanschbar, in welchem eine fensterartige Öffnung vorgesehen ist. Damit wird der Vorteil erreicht, dass in axialer Richtung, d. h. in Richtung der Hauptwelle des Getriebes Bauraum eingespart wird, da das Zusatzgetriebe seitlich, d. h. achsparallel angeflanscht wird. Haupt- und Zusatzgetriebe sind derart ausgelegt, dass das Gesamtgetriebe sowohl mit Kriechganggetriebe als auch ohne Kriechganggetriebe verwendbar ist. In letzterem Falle wird die Flanschöffnung, z. B. durch einen geeigneten Gehäusedeckel geschlossen.

Nach einer bevorzugten Ausführungsform ist das Zusatzgetriebe als Planetengetriebe ausgebildet, d. h. es weist einen Planetenradsatz sowie Zwischenräder auf, welche mit Zahnrädern des Hauptgetriebes in Zahnradeingriff stehen. Durch die seitliche Anordnung des Zusatzgetriebes ergibt sich eine kompakte Bauweise, da Bauraum auch bezüglich der Getriebehöhe gewonnen wird.

Nach einer bevorzugten Ausführungsform ist das Planetengetriebe zweistufig ausgebildet, wobei bevorzugt zwei etwa symmetrisch angeordnete Planetenstufen mit einer gemeinsamen Koppelwelle vorgesehen sind. Bevorzugt können die Einzelteile der beiden Planetenstufen gleich ausgebildet sein, wodurch Fertigungskosten gespart werden.

Das Zusatzgetriebe für den Kriechgang wird fertig vormontiert und über eine Flanschverbindung mit dem Hauptgetriebe verbunden, wobei die am Zusatzgetriebe gelagerten Zwischenräder in Eingriff mit der Abtriebsseite des Vorschaltgetriebes (1. Gruppe) und der Vorgelegewelle des Schaltgetriebes (2. Gruppe) kommen. Von Vorteil ist hierbei eine einfache Montage des Zusatzgetriebes, welches somit auch einfach nachrüstbar ist.

Nach einer bevorzugten Ausführungsform ist auf der Vorgelegewelle des Schaltgetriebes eine Schalteinrichtung angeordnet, welche einerseits einen Durchtrieb vom Vorschaltgetriebe zum Schaltgetriebe, d. h. von der ersten zur zweiten Gruppe oder eine Zuschaltung des Kriechganges über das Zusatzgetriebe ermöglicht. In letzterem Falle treibt die Ausgangswelle des Vorschaltgetriebes (erste Gruppe) über ein erstes Zwischenrad in das Planetengetriebe (Zusatzgetriebe), während der Abtrieb aus dem Planetengetriebe über das zweite Zwischenrad auf die Vorgelegewelle des Schaltgetriebes erfolgt. Damit ist der Kriechgang bedarfsweise zuschaltbar.

Nach einer weiteren bevorzugten Ausführungsform ist auf der Koppelwelle des zweistufigen Planetengetriebes eine Schalteinrichtung angeordnet, welche ein Abkoppeln des Planetengetriebes erlaubt, falls der Kriechgang für längere Zeit nicht benötigt wird. Damit wird der Vorteil erreicht, dass Wirkungsgradverluste durch ein leer mitlaufendes Planetengetriebes vermieden werden.

Nach einer weiteren bevorzugten Ausführungsform ist der zweiten Gruppe des Getriebes, d. h. dem Schaltgetriebe eine vierte Gruppe, d. h. ein Nachschaltgetriebe zugeordnet, durch welches eine weitere Untersetzung durch eine schaltbare Vorgelegestufe erreichbar ist. Damit wird die Anzahl der Gänge nochmals verdoppelt und der Übersetzungsbereich erweitert.

Nach einer weiteren bevorzugten Ausführungsform umfasst das Nachschaltgetriebe (vierte Gruppe) zusätzlich Schalt- und Getriebeelemente, über welche ein Antrieb der Vorderräder des Fahrzeuges zuschaltbar ist. Damit ist das Fahrzeug mit Allradantrieb verwendbar.

Ein Ausführungsbeispiel der Erfindung ist in der Zeichnung dargestellt und wird im Folgenden näher beschrieben. Es zeigen
- Fig. 1: ein Schema des Gesamtgetriebes für ein motorbetriebenes Fahrzeug mit Getriebegruppen I, II, IV,
- Fig. 1a: ein Schema eines erfindungsgemäßen Zusatzgetriebes für einen Kriechgang (Getriebegruppe III),
- Fig. 2: ein weiteres Schema des erfindungsgemäßen Kriechganggetriebes entsprechend Fig. 1 a,
- Fig. 3: einen Schnitt durch das Getriebe mit angeflanschtem Zusatzgetriebe,
- Fig. 4: einen Schnitt entsprechend der Ebene IV-IV in Fig. 3 (um 90° gedreht),
- Fig. 5: einen Schnitt in der Ebene V-V gemäß Fig. 3 und
- Fig. 6: eine Ansicht auf den Flansch des Zusatzgetriebes.

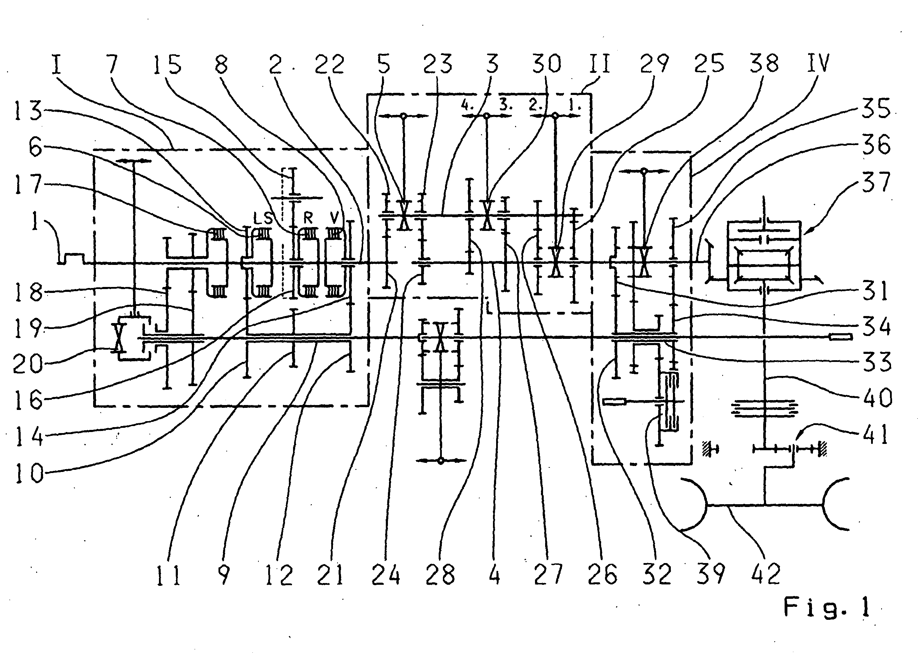

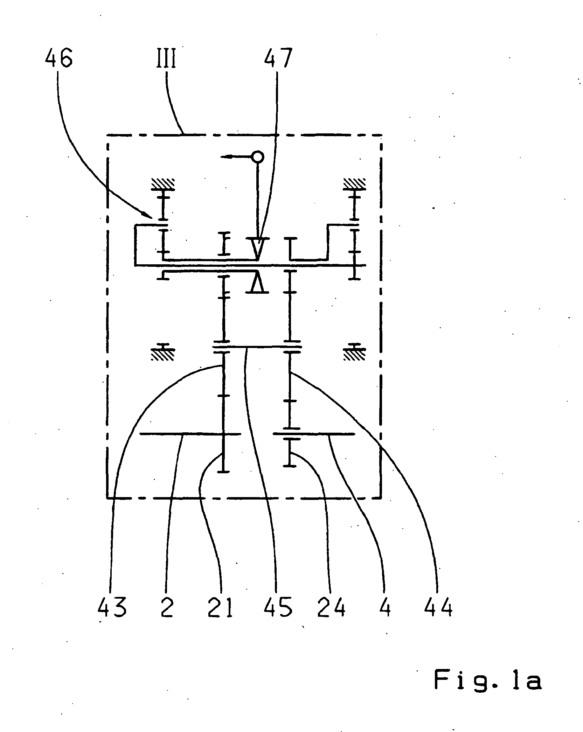

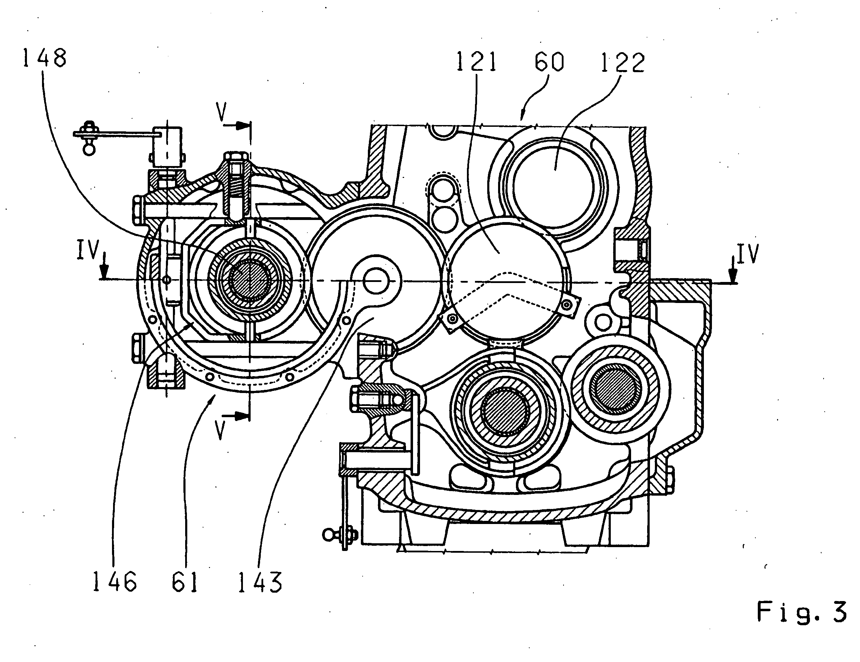

Fig. 1 zeigt ein Schema eines Gesamtgetriebes für ein motorbetriebenes Landfahrzeug, welches vorzugsweise für land- und/oder bauwirtschaftliche Zwecke einsetzbar ist, beispielsweise als Schlepperfahrzeug. Das Gesamtgetriebe ist in mehrere Getriebegruppen aufgeteilt, welche durch die Ziffern I, II, IV in Fig. 1 und III in Fig. 1a gekennzeichnet sind. Die Getriebegruppe I, im Folgenden auch kurz erste Gruppe genannt, umfasst im Wesentlichen ein Vorschaltgetriebe mit einer motorseitigen Antriebswelle 1 und einer Ausgangswelle 2, welche die Eingangswelle für den Antrieb der Getriebegruppe II, im Folgenden auch kurz als zweite Gruppe bezeichnet, bildet. Die zweite Gruppe umfasst im Wesentlichen ein viergängiges Schaltgetriebe mit einer Vorgelegewelle 3 und einer Hauptwelle 4. Auf der Vorgelegewelle 3 ist eine Schalteinrichtung 5 angeordnet, welche einerseits einen Durchtrieb von der Ausgangswelle 2 auf die Vorlegewelle 3 und andererseits eine Zuschaltung eines über die Ausgangswelle 2 angetriebenen Kriechganggetriebes erlaubt, welches in Fig. 1a als Getriebegruppe III, im Folgenden auch dritte Gruppe genannt, dargestellt ist. Das Kriechganggetriebe bzw. die Getriebegruppe III ist erfindungsgemäß als Zusatzgetriebe ausgebildet, welches an das Gesamtgetriebe, insbesondere die Getriebegruppe II anflanschbar ist. Dies ist in den Figuren 3 bis 6 dargestellt und wird dort näher erläutert.

Die Getriebegruppe I wird von einem nicht dargestellten Verbrennungsmotor des Fahrzeuges mit Motordrehzahl angetrieben. Auf der Antriebswelle 1 sind drei Kupplungen angeordnet: eine Vorschaltkupplung 6, eine Kupplung 7 zum Schalten von Rückwärtsgängen und eine Kupplung 8 zum Schalten von Vorwärtsgängen. Mit der Vorschaltkupplung 6 kann entweder auf Durchtrieb (Direktantrieb) geschaltet werden, sodass die Ausgangswelle 2 mit der Motordrehzahl der Antriebswelle 1 läuft. Der Antriebswelle 1 bzw. der Ausgangswelle 2 ist eine als Hohlwelle ausgebildete Vorgelegewelle 9 mit Zahnrädern 10, 11, 12 zugeordnet. Ein Zahnrad 13 bildet mit dem Zahnrad 10 eine erste Stirnradstufe und ein Zahnrad 14 bildet mit dem Zahnrad 12 eine zweite Stirnradstufe zur Untersetzung der Motordrehzahl. Über die Vorschaltkupplung 6 kann - alternativ zum Direktantrieb - eine Untersetzung der Motorrehzahl über die Vorgelegewelle 9 und die beiden Stirnradstufen 13/10, 12/14 geschaltet werden. Über die Kupplung 8 werden Vorwärtsgänge und über die Kupplung 7 Rückwärtsgänge geschaltet. Das Zahnrad 11 auf der Vorgelegewelle 9 ist über ein Zwischenrad 15 und ein Zahnrad 16 mit der Kupplung 7 verbunden. Auf der Antriebswelle 1 ist eine weitere Kupplung 17 angeordnet, über welche nicht dargestellte Nebenantriebe über zwei Vorgelegestufen 18, 19 und eine Schalteinrichtung 20 antreibbar sind. Auf der Ausgangswelle 2 ist ein Stirnrad 21 angeordnet, welches den Abtrieb der ersten Gruppe und den Antrieb der zweiten Gruppe bildet. Auf der Vorgelegewelle 3 sind beiderseits der Schalteinrichtung 5 zwei Losräder 22, 23 angeordnet, wobei das Losrad 22 mit dem Stirnrad 21 in Eingriff steht und das Losrad 23 mit einem weiteren Losrad 24 auf der Hauptwelle 4 kämmt. Wie bereits erwähnt, wird über die Schalteinrichtung 5, z. B. eine Schiebemuffe, entweder das Losrad 22 oder das Losrad 23 mit der Vorgelegewelle 3 verbunden. Mit der Zuschaltung des Losrads 23 und der Schalteinrichtung 47 erfolgt die Zuschaltung des Kriechganges über die dritte Gruppe, sodass das Losrad 24 von der dritten Gruppe angetrieben wird, andernfalls erfolgt der Durchtrieb auf die Vorgelegewelle 3 und die Hauptwelle 4, und zwar über eines der vier Zahnradpaare 25, 26, 27, 28 für den ersten, zweiten, dritten oder vierten Gang, wobei die einzelnen Gänge über Schalteinrichtungen (Schiebemuffen) 29 und 30 geschaltet werden. Durch das Vorschaltgetriebe I mit der Vorschaltkupplung 6 und das viergängige Schaltgetriebe II können somit acht Gänge für die Hauptwelle 4 geschaltet werden. Dem Schaltgetriebe II ist ein Nachschaltgetriebe IV, nachgeordnet, welches über ein Zahnrad 31 auf der Hauptwelle 4 angetrieben wird. Das Nachschaltgetriebe IV umfasst eine Vorgelegestufe, bestehend aus dem antreibenden Zahnrad 31, einem Zahnrad 32, einer als Hohlwelle ausgebildeten Vorgelegewelle 33, ein weiteres Zahnrad 34 und ein Losrad 35, welches auf einer Ritzelwelle 36 zum Antrieb eines Differenzials 37 angeordnet ist. Auf der Ritzelwelle 36 ist eine Schalteinrichtung 38 angeordnet, welche einerseits den Durchtrieb von der Hauptwelle 4 auf die Ritzelwelle 36 oder eine Untersetzung über die Vorgelegestufe 31/32, 34/35 erlaubt. Dadurch werden die acht schaltbaren Vorwärtsgänge auf sechzehn Vorwärtsgänge verdoppelt, wobei die unteren acht Gänge vorzugsweise für Fahren im Gelände vorgesehen sind. Über eine Kupplung 39 ist die Zuschaltung eines nicht dargestellten Vorderradantriebes möglich, sodass das Fahrzeug mit Allradantrieb betreibbar ist. Vom Differenzial 37 erfolgt über eine Antriebswelle 40 und eine Planetenstufe 41 der Antrieb auf ein Hinterrad 42.

**Fig. 1**a zeigt - wie bereits oben erwähnt - die Getriebegruppe III, d. h. das Kriechganggetriebe, welches über das abtriebsseitige Zahnrad 21 auf der Ausgangswelle 2 und das Losrad 24 auf der Hauptwelle 4 an die zweite Gruppe angeschlossen ist. Die Zahnräder 21, 24 kämmen mit zwei als Losrädern ausgebildeten Zwischenrädern 43, 44, welche auf einer Achse 45 gelagert sind. Das Zwischenrad 43 treibt ein zweistufiges Planetengetriebe 46 an, welches abtriebsseitig das Zwischenrad 44 antreibt. Durch eine Schalteinrichtung 47, z. B. eine Schiebemuffe, kann das Planetengetriebe 46 zur Vermeidung von Leerlaufverlusten abgekoppelt werden. Das Kriechganggetriebe III, welches als Zusatzgetriebe ausgebildet ist, wird im Folgenden näher beschrieben und in weiteren Figuren genauer dargestellt.

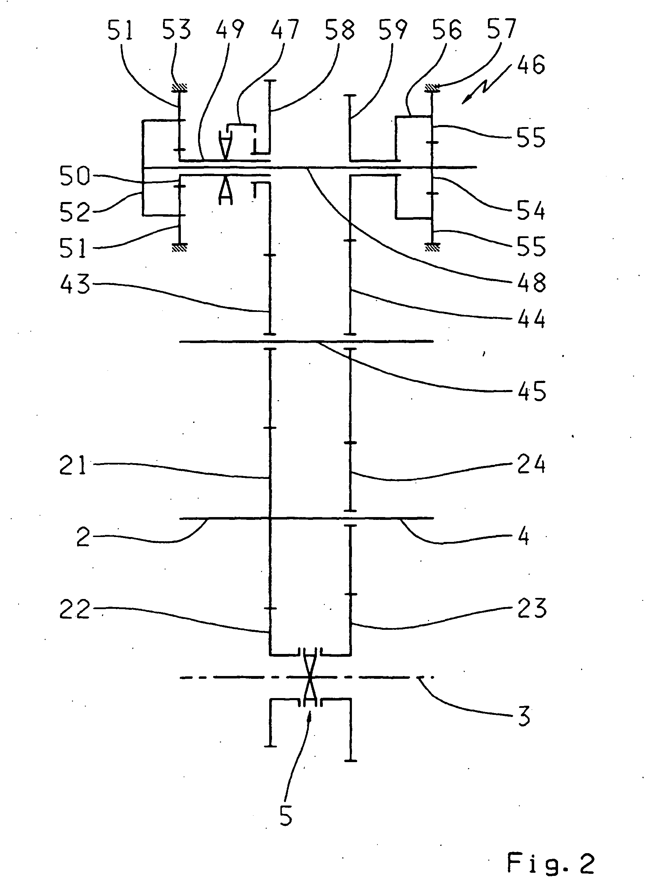

**Fig. 2** zeigt ein Schema des Kriechganggetriebes, d. h. der Getriebegruppe III gemäß Fig. 1 in vergrößerter Darstellung, wobei für gleiche Teile gleiche Bezugszahlen wie zuvor verwendet werden. Die schematische Darstellung sämtlicher Wellen folgt in einer Ebene, was beim bevorzugten Ausführungsbeispiel gemäß Figuren 3, 4, 5 jedoch nicht der Fall ist. Das Planetengetriebe 46 ist, wie oben erwähnt, zweistufig ausgebildet und weist eine durchgehende Welle 48, auch Koppelwelle genannt, auf, welche beide Planetenstufen miteinander verbindet. Auf der durchgehenden Welle 48 ist eine als Hohlwelle ausgebildete Sonnenwelle 49 mit einem Sonnenrad 50 angeordnet, welches mit Planetenrädern 51 kämmt. Ein Planetenträger 52 ist mit der durchgehenden Welle 48 verbunden. Die Planetenräder 51 kämmen mit einem gehäusefesten Hohlrad 53. Das Sonnenrad 50, die Planetenräder 51, der Planetenträger 52 (Stegwelle) und das Hohlrad 53 bilden die erste Planetenstufe, welche über die durchgehende Welle 48 mit einer zweiten, in der Zeichnung rechts dargestellten Planetenstufe verbunden ist. Die durchgehende Welle 48 bildet somit die Koppelwelle zwischen beiden Planetenstufen und weist an ihrem Ende ein Sonnenrad 54 auf, welches mit Planetenrädern 55 kämmt, welche auf einem Planetenträger 56 (Stegwelle) gelagert sind und mit einem gehäusefesten Hohlrad 57 in Eingriff stehen. Sonnenrad 54, Planetenräder 55, Stegwelle 56 und Hohlrad 57 bilden somit die zweite Planetenstufe. Der Antrieb des zweistufigen Planetengetriebes 45 erfolgt über ein schaltbares Losrad 58, der Abtrieb über ein mit der Stegwelle 56 verbundenes Stirnrad 59. Zwischen Losrad 58 und der Hohlwelle 49 mit Sonnenrad 50 ist die Schalteinrichtung 47 (vgl. auch Fig. 1 a) angeordnet, welche als Schiebemuffe oder als Schieberad ausgebildet sein kann. Durch die Schalteinrichtung 47 kann das Planetengetriebe 46 zugeschaltet werden: in diesem Falle erfolgt der Antrieb von der Welle 2 über das Zahnrad 21, das Zwischenrad 43 auf das Zahnrad 58 und von diesem auf das Sonnenrad 50. Der Abtrieb erfolgt über das Stirnrad 59, das Zwischenrad 44 und das Losrad 24 auf das Losrad 23, und von diesem über die Schalteinrichtung 5 auf die Vorlegewelle 3. Damit ist eine Kriechganguntersetzung von ca. 1 : 17, d. h. eine besonders hohe Untersetzung erreichbar. Bei geöffneter Schalteinrichtung 47 ist das gesamte Planetengetriebe 46 abgekoppelt - anderenfalls würde es wegen des permanenten Zahneingriffes zwischen den Zahnrädern 21, 43 und 58 dauernd mitgeschleppt werden, auch wenn der Kriechgang für längere Zeit nicht benötigt wird. Durch das Abschalten des Planetengetriebes 46 über die Schalteinrichtung 47 können somit Wirkungsgradverluste vermieden werden, wenn der Kriechgang nicht benötigt wird.

**Fig. 3** zeigt einen Schnitt, quer zu den einzelnen Getriebewellen durch ein Hauptgetriebe 60 und ein Zusatzgetriebe 61, welches an das Hauptgetriebe 60 angeflanscht ist. Das dargestellte Hauptgetriebe 60 sowie das Zusatzgetriebe 61 stellen eine konstruktive Ausführung der zuvor beschriebenen Getriebeschemata gemäß Fig. 1, 1a und 2 dar, daher sind gleiche Teile wie Wellen, Zahnräder und Schalteinrichtungen mit denselben jeweils um 100 erhöhten Bezugszahlen versehen. Das Zusatzgetriebe 61 nimmt das Planetengetriebe 146 (Kriechganggetriebe) auf, welches koaxial zur Koppelwelle 148 angeordnet ist und über das Zwischenrad 143 vom Zahnrad 121 angetrieben wird. Man erkennt aus dieser Darstellung, dass das Zusatzgetriebe 61 seitlich neben dem Hauptgetriebe 60 angeordnet ist - die Bauhöhe des Hauptgetriebes 60 wird somit durch das Zusatzgetriebe 61 nicht verändert. Ferner ist aus dieser Darstellung ersichtlich, dass das Zahnrad 121 mit zwei Zahnrädern 143, 122 in verschiedenen Ebenen in Eingriff steht, während die entsprechenden Zahnräder 21, 22, 43 in Fig. 1, 1a und 2 der Übersichtlichkeit halber in einer Ebene dargestellt sind.

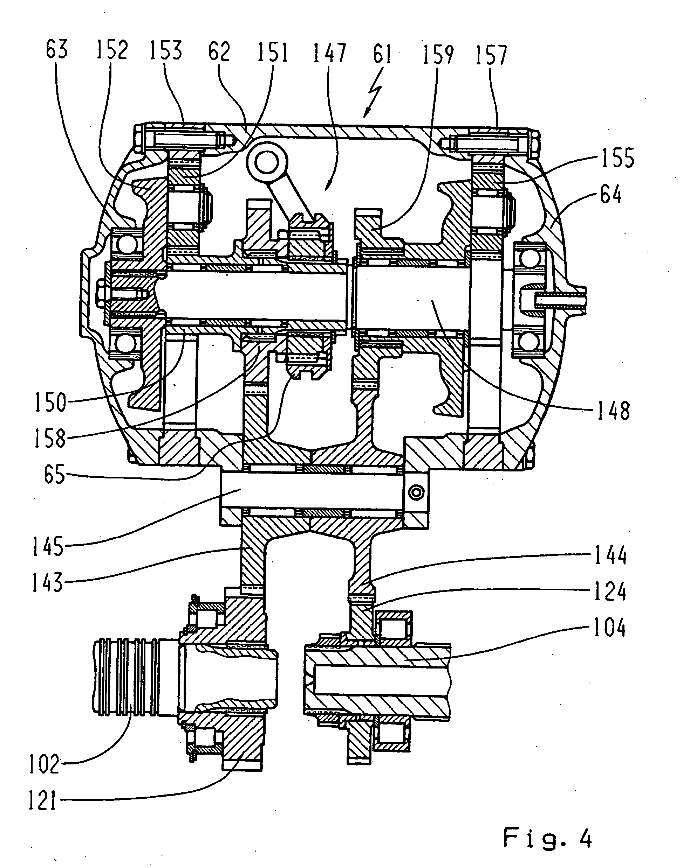

**Fig. 4** zeigt einen Schnitt durch das Zusatzgetriebe 61 gemäß der Schnittebene IV-IV in Fig. 3. Im Übrigen entspricht diese konstruktive Ausführung des Zusatzgetriebes 61 der schematischen Darstellung in Fig. 1 a. Das Zusatzgetriebe 61 besteht aus einem mittleren etwa zylindrisch ausgebildeten Gehäuseteil 62, an welchen sich stirnseitig jeweils ein scheibenförmig ausgebildetes Hohlrad 153, 157 anschließt. Das Zusatzgetriebe 61 wird beidseitig durch Gehäusedeckel 63, 64 abgeschlossen, welche mit dem mittleren Gehäuseteil 62 verschraubt sind. Das mittlere Gehäuseteil 62 weist zwei Augen 62a, 62b auf, in welchen der Achsbolzen 145 zur Lagerung der Zwischenräder 143, 144 befestigt ist. Die Zwischenräder 143, 144 kämmen mit den Zahnrädern 121, 124, welche auf den Wellen 102, 104 befestigt bzw. gelagert sind. Andererseits kämmen die Zwischenräder 143, 144 mit den Zahnrädern 158, 159, welche auf der Koppelwelle 148 angeordnet sind. Zwischen beiden Zahnrädern 158, 159 ist die Schalteinrichtung 147 angeordnet, welche als Schiebemuffe 65 ausgebildet ist und eine Drehmomentverbindung vom Zahnrad 158 zum Sonnenrad 150 herstellt, wenn das Kriechganggetriebe benötigt wird. Die in der Zeichnung dargestellte Position der Schiebemuffe 65 zeigt das Kriechganggetriebe im "Leerlauf", d. h. das vom Zwischenrad 143 angetriebene Zahnrad 158 läuft leer mit, und das Kriechganggetriebe steht. Aus der Darstellung ist erkennbar, dass die beiden Planetenstufen bzw. ihre Einzelteile wie Planetenräder, Hohlräder, Planetenträger annähernd gleich ausgebildet sind, insbesondere können Sonnenräder, Planetenräder und Hohlräder gleiche Zähnezahlen aufweisen.

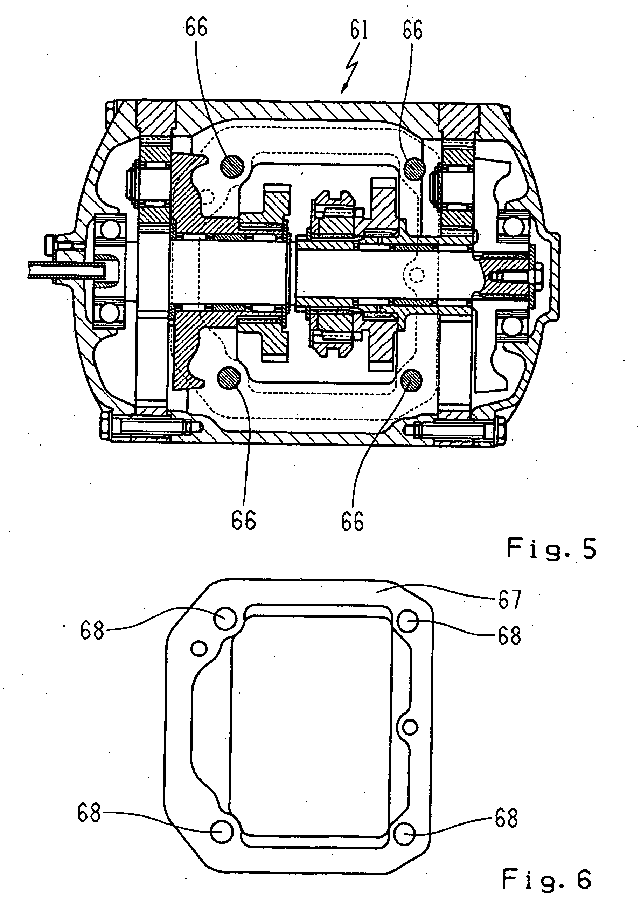

**Fig. 5** zeigt das Zusatzgetriebe 61 als Schnitt in einer Ebene V-V in Fig. 3- Blickrichtung ist also auf das Hauptgetriebe 60. Das Zusatzgetriebe 61 ist über vier Schraubbolzen 66, die auch in Fig. 3 erkennbar sind, mit dem Gehäuse des Hauptgetriebes 60 verspannt. Die Abdichtung beider Getriebe 60, 61 erfolgt über einen geschlossenen Flansch, welcher in Fig. 6 dargestellt ist.

**Fig. 6** zeigt den Flansch 67 des Zusatzgetriebes 61. Innerhalb der Flanschkontur sind Bohrungen 68 zur Aufnahme der Schraubbolzen 66 angeordnet. Damit ist eine einfache Befestigungsmöglichkeit für das Zusatzgetriebe 61 an dem Hauptgetriebe 60 gegeben, wobei gleichzeitig eine Abdichtung zwischen beiden Gehäusen erfolgt. Das Zusatzgetriebe 61 kann bedarfsweise angeflanscht werden, d. h. sofern ein Kriechgang für das Gesamtgetriebe benötigt wird. Andererseits ist es also auch möglich, auf das Zusatzgetriebe 61 zu verzichten - die entsprechende Öffnung im Gehäuse des Hauptgetriebes 61 kann dann durch einen geeigneten Gehäusedeckel mit dem Flanschbild gemäß Fig. 6 geschlossen werden.

### Bezugszeichen

- 1: Antriebswelle (Motorwelle)
- 2: Ausgangswelle
- 3: Vorgelegewelle
- 4: Hauptwelle
- 5: Schalteinrichtung
- 6: Vorschaltkupplung (LS)
- 7: Kupplung (R)
- 8: Kupplung (V)
- 9: Vorgelegewelle
- 10: Zahnrad
- 11: Zahnrad
- 12: Zahnrad
- 13: Zahnrad
- 14: Zahnrad
- 15: Zwischenrad
- 16: Zahnrad
- 17: Kupplung (Nebenantriebe)
- 18: Vorgelegestufe (Nebenantriebe)
- 19: Vorgelegestufe (Nebenantriebe)
- 20: Schalteinrichtung (Nebenantriebe)
- 21: Stirnrad
- 22: Losrad
- 23: Losrad
- 24: Losrad
- 25: Zahnradpaar (1. Gang)
- 26: Zahnradpaar (2. Gang)
- 27: Zahnradpaar (3. Gang)
- 28: Zahnradpaar (4. Gang)
- 29: Schalteinrichtung
- 30: Schalteinrichtung
- 31: Zahnrad (Abtrieb 2. Gruppe)
- 32: Zahnrad
- 33: Vorgelegewelle (Hohlwelle)
- 34: Zahnrad
- 35: Losrad
- 36: Ritzelwelle
- 37: Differenzial
- 38: Schalteinrichtung
- 39: Kupplung (Vorderradantrieb)
- 40: Antriebswelle (Hinterrad)
- 41: Planetenstufe
- 42: Hinterrad
- 43: Zwischenrad
- 44: Zwischenrad
- 45: Achsbolzen
- 46: Planetengetriebe
- 47: Schalteinrichtung
- 48: durchgehende Welle (Koppelwelle)
- 49: Sonnenwelle
- 50: Sonnenrad
- 51: Planetenrad
- 52: Planetenträger
- 53: Hohlrad
- 54: Sonnenrad
- 55: Planetenrad
- 56: Planetenträger (Stegwelle)
- 57: Hohlrad
- 58: Losrad
- 59: Stirnrad
- 60: Hauptgetriebe
- 61: Zusatzgetriebe
- 62: Gehäusemittelteil
- 63: Gehäusedeckel
- 64: Gehäusedeckel
- 65: Schiebemuffe
- 66: Schraubbolzen
- 67: Flansch
- 68: Bohrung

- 102: Ausgangswelle
- 104: Hauptwelle
- 121: Zahnrad
- 122: Zahnrad
- 124: Zahnrad

- 143: Zwischenrad
- 144: Zwischenrad
- 145: Achsbolzen
- 146: Planetengetriebe
- 147: Schalteinrichtung
- 148: Koppelwelle

- 150: Sonnenrad
- 151: Planetenrad
- 152: Planetenträger
- 153: Hohlrad
- 155: Planetenrad
- 157: Hohlrad
- 158: Zahnrad
- 159: Zahnrad

## Patentansprüche

1. Getriebe eines von einem Motor antreibbaren Fahrzeuges, welches mindestens eine erste motorseitige Gruppe (I) und eine zweite abtriebsseitige Gruppe (II) aufweist sowie eine dritte mittlere Gruppe (III) aufweisen kann,
wobei die erste Gruppe (I) eine Antriebsweile (1) sowie Schalt- und Getriebeelemente (6, 7, 8) zum Schalten von Vorwärtsgängen, von Rückwärtsgängen sowie einer Langsamstufe und einer Schnellstufe aufweist, wobei die zweite Gruppe (II) Schalt- und Getriebeelemente (3, 4, 25, 26, 27, 28, 29, 30) zum Schalten von mindestens vier Gängen aufweist und wobei die dritte Gruppe (III) Schalt- und Getriebeelemente zum Schalten eines Kriechganges aufweist,
wobei die erste und die zweite Gruppe (I, II) als Hauptgetriebe (60) und die dritte Gruppe (III) als Zusatzgetriebe (61) ausgebildet sind, so dass das Hauptgetriebe (I,II) bedarfsweise mit dem Zusatzgetriebe (61) bestückt werden kann und zwischen die erste und die zweite Gruppe (I, II) scheltbar ist, **dadurch gekennzeichnet, dass** das Zusatzgetriebe (61) seitlich an das Hauptgetriebe (60) anflanschbar ist.

2. Getriebe nach Anspruch 1, **dadurch gekennzeichnet, dass** die erste Gruppe (I) eine Ausgangswelle (2) und die zweite Gruppe (II) eine Hauptwelle (4) aufweist, die koaxial zueinander angeordnet sind, und dass das Zusatzgetriebe (61) ein Planetengetriebe (48; 146) sowie Zwischenräder (43, 44; 143, 144) aufweist, welche zwischen die Ausgangswelle (2; 102) und die Hauptwelle (4; 104) schaltbar sind.

3. Getriebe nach Anspruch 2, **dadurch gekennzeichnet, dass** das Planetengetriebe (46; 146) zwei Planetenstufen mit einer Koppelweile (48; 148) aufweist.

4. Getriebe nach Anspruch 2 oder 3, **dadurch gekennzeichnet, dass** das Planetengetriebe (46; 146) über eine Schalteinrichtung (47; 147) zu- und abschaltbar ist.

5. Getriebe nach Anspruch 2, 3 oder 4, **dadurch gekennzeichnet, dass** die beiden Planetenstufen im Wesentlichen gleich ausgebildet sind und insbesondere gleiche Planetenräder (51, 55; 151, 155) und gleiche Hohlräder (53, 57; 153, 157) aufweisen.

6. Getriebe nach einem der vorhergehenden Ansprüche, **dadurch gekennzeichnet, dass** das Zusatzgetriebe (61) einen Flansch (67) und das Hauptgetriebe (60) einen Gegenflansch aufweist und dass beide Getriebe (60, 61) über den Flansch (67) miteinander verbunden und abgedichtet sind.

7. Getriebe nach einem der vorhergehenden Ansprüche, **dadurch gekennzeichnet, dass** parallel zur Hauptwelle (4) der zweiten Gruppe (II) eine Vorgelegewelle (3) angeordnet ist, auf welcher eine Schalteinrichtung (5) zum Schalten eines Durchtriebes von der Ausgangswelle (2) auf die Hauptwelle (4) oder des Kriechganges angeordnet ist.

8. Getriebe nach einem der vorhergehenden Ansprüche, **dadurch gekennzeichnet, dass** das Gehäuse des Zusatzgetriebes (61) im Wesentlichen symmetrisch zu einer Mittelebene aufgebaut ist und einen mittlenen, beidseitig offenen Gehäuseteil (62), zwei als Hohlräder ausgebildet Gehäusescheiben (153, 157) und zwei Gehäusedeckel (63, 64) aufweist.

9. Getriebe nach Anspruch 6 **dadurch gekennzeichnet, dass** das Gehäuse des Hauptgetriebes (60) im Bereich des Gegenflansches eine fensterartige Öffnung aufweist, innerhalb welcher die Zwischenräder (43, 44; 143, 144) angeordnet sind.

10. Getriebe nach Anspruch 2 und nach Anspruch 9, **dadurch gekennzeichnet, dass** die Zwischenräder (43, 44; 143, 144) über einen im mittleren Gehäuseteil (62) des Zusatzgetriebes (61) befestigten Bolzen (145) gelagert sind.

11. Getriebe nach Anspruch 8, 9 oder 10, **dadurch gekennzeichnet, dass** der mittlere Gehäuseteil (82) mit dem Gehäuse des Hauptgetriebes (60) verspannt ist, insbesondere durch Schraubbolzen (66).

12. Getriebe nach einem der vorhergehende Ansprüche, **dadurch gekennzeichnet, dass** der zweiten Gruppe (11) eine vierte Gruppe (IV) zur Untersetzung der Abtriebsdrehzahl der zweiten Gruppe (II) nachgeschaltet ist.

13. Getriebe nach Anspruch 12, **dadurch gekennzeichnet, dass** die vierte Gruppe (IV) Schalt- und Getriebeelemente (39) zur Zuschaltung eines Vorderradantriebes aufweist.

## Claims

1. Transmission of a vehicle which can be driven by an engine, which transmission has at least one engine-side group (I) and one second output-side group (II) and can have a third middle group (III), the first group (I) having a drive shaft (1) and selector and transmission elements (6, 7, 8) for selecting forward gears, reverse gears and a slow stage and a fast stage, the second group (II) having selector and transmission elements (3, 4, 25, 26, 27, 28, 29, 30) for selecting at least four gears, and the third group (III) having selector and transmission elements for selecting a crawler gear, the first and the second groups (I, II) being configured as main transmission (60) and the third group (III) being configured as additional transmission (61), with the result that the main transmission (I, II) can be fitted if required with the additional transmission (61) and can be switched between the first and the second group (I, II), **characterized in that** the additional transmission (61) can be flange-connected laterally to the main transmission (60).

2. Transmission according to Claim 1, **characterized in that** the first group (I) has an output shaft (2) and the second group (II) has a main shaft (4) which are arranged coaxially with respect to one another, and **in that** the additional transmission (61) has a planetary gear mechanism (46; 146) and intermediate gears (43, 44; 143, 144) which can be switched between the output shaft (2; 102) and the main shaft (4; 104).

3. Transmission according to Claim 2, **characterized in that** the planetary gear mechanism (46; 146) has two planetary stages with a coupler shaft (48; 148).

4. Transmission according to Claim 2 or 3,
**characterized in that** the planetary gear mechanism (46; 146) can be engaged and disengaged via a selector device (47; 147).

5. Transmission according to Claim 2, 3 or 4,
**characterized in that** the two planetary stages are of substantially identical configuration and have, in particular, identical planetary gears (51, 55; 151, 155) and identical internal gears (53, 57; 153, 157).

6. Transmission according to one of the preceding claims, **characterized in that** the additional transmission (61) has a flange (67) and the main transmission (60) has a mating flange, and **in that** both transmissions (60, 61) are connected to one another and sealed via the flange (67).

7. Transmission according to one of the preceding claims, **characterized in that** an idler shaft (3) is arranged parallel to the main shaft (4) of the second group (II), on which idler shaft (3) a selector device (5) is arranged for selecting a through-connected drive from the output shaft (2) to the main shaft (4) or for selecting the crawler gear.

8. Transmission according to one of the preceding claims, **characterized in that** the housing of the additional transmission (61) is of substantially symmetrical construction with respect to a centre plane and has a central housing part (62) which is open to both sides, two housing washers (153, 157) which are configured as internal gears, and two housing covers (63, 64).

9. Transmission according to Claim 6, **characterized in that** the housing of the main transmission (60) has a window-like opening in the region of the mating flange, within which window-like opening the intermediate gears (43, 44; 143, 144) are arranged.

10. Transmission according to Claim 2 and according to Claim 9, **characterized in that** the intermediate gears (43, 44; 143, 144) are mounted via a pin (145) which is fastened in the central housing part (62) of the additional transmission (61).

11. Transmission according to Claim 8, 9 or 10, **characterized in that** the central housing part (62) is clamped with the housing of the main transmission (60), in particular by threaded bolts (66).

12. Transmission according to one of the preceding claims, **characterized in that** a fourth group (IV) for stepping down the output speed of the second group (II) is connected behind the second group (II).

13. Transmission according to Claim 12, **characterized in that** the fourth group (IV) has selector and transmission elements (39) for engaging a front-wheel drive.

## Revendications

1. Transmission d'un véhicule pouvant être entraîné par un moteur, qui présente au moins un premier groupe côté moteur (I) et un deuxième groupe côté prise de force (II), et qui peut présenter un troisième groupe central (III), le premier groupe (I) présentant un arbre d'entraînement (1) ainsi que des éléments de changement de vitesse et de transmission (6, 7, 8) pour passer des vitesses de marche avant, des vitesses de marche arrière ainsi qu'un rapport de ralenti et un rapport rapide, le deuxième groupe (II) présentant des éléments de changement de vitesse et de transmission (3, 4, 25, 26, 27, 28, 29, 30) pour passer au moins quatre vitesses et le troisième groupe (III) présentant des éléments de changement de vitesse et de transmission pour passer une vitesse de roulage au pas, le premier et le deuxième groupe (I, II) étant réalisés sous forme de transmission principale (60) et le troisième groupe (III) étant réalisé sous forme de transmission secondaire (61), de sorte que la transmission principale (I, II) puisse au besoin être équipée avec la transmission secondaire (61), et puisse être commutée entre le premier et le deuxième groupe (I, II), **caractérisée en ce que** la transmission secondaire (61) peut être bridée latéralement à la transmission principale (60).

2. Transmission selon la revendication 1,
**caractérisée en ce que** le premier groupe (I) présente un arbre de sortie (2) et le deuxième groupe (II) présente un arbre principal (4), qui sont disposés coaxialement l'un par rapport à l'autre, et **en ce que** la transmission supplémentaire (61) présente un engrenage planétaire (46 ; 146) ainsi que des pignons intermédiaires (43, 44 ; 143, 144), qui peuvent être commutés entre l'arbre de sortie (2 ; 102) et l'arbre principal (4 ; 104).

3. Transmission selon la revendication 1,
**caractérisée en ce que** l'engrenage planétaire (46 ; 146) présentent deux étages planétaires avec un arbre d'accouplement (48 ; 148).

4. Transmission selon la revendication 2 ou 3,
**caractérisée en ce que** l'engrenage planétaire (46 ; 146) peut être engagé et désengagé par le biais d'un dispositif de commutation (47 ; 147).

5. Transmission selon la revendication 2, 3 ou 4, **caractérisée en ce que** les deux étages planétaires sont réalisés essentiellement de manière identique et présentent notamment les mêmes pignons satellites (51, 55 ; 151, 155) et les mêmes couronnes (53, 57 ; 153, 157).

6. Transmission selon l'une quelconque des revendications précédentes, **caractérisée en ce que** la transmission secondaire (61) présente une bride (67) et la transmission principale (60) une bride conjuguée, et **en ce que** les deux transmissions (60, 61) sont connectées l'une à l'autre et étanchées par le biais de la bride (67).

7. Transmission selon l'une quelconque des revendications précédentes, **caractérisée en ce que** parallèlement à l'arbre principal (4) du deuxième groupe (II) est disposé un arbre secondaire (3) sur lequel est disposé un dispositif de commutation (5) pour la commutation d'une prise directe de l'arbre de sortie (2) à l'arbre principal (4) ou de la vitesse de roulage au pas.

8. Transmission selon l'une quelconque des revendications précédentes, **caractérisée en ce que** le boîtier de la transmission secondaire (61) est construit essentiellement de manière symétrique à un plan médian et présente une partie de boîtier centrale ouverte des deux côtés (62), deux disques de boîtier (153, 157) réalisés sous forme de couronnes et deux couvercles de boîtier (63, 64).

9. Transmission selon la revendication 6,
**caractérisée en ce que** le boîtier de la transmission principale (60) présente dans la région de la bride conjuguée une ouverture de type fenêtre à l'intérieur de laquelle sont disposés les pignons intermédiaires (43, 44 ; 143, 144).

10. Transmission selon les revendications 2 et 9,
**caractérisée en ce que** les pignons intermédiaires (43, 44 ; 143, 144) sont montés par le biais d'un boulon (145) fixé dans la partie de boîtier centrale (62) de la transmission secondaire (61).

11. Transmission selon la revendication 8, 9, ou 10, **caractérisée en ce que** la partie de boîtier centrale (62) est serrée au boîtier de la transmission principale (60) notamment par des boulons de vissage (66).

12. Transmission selon l'une quelconque des revendications précédentes, **caractérisée en ce que** le deuxième groupe (II) est monté en amont d'un quatrième groupe (IV) pour l'assistance au régime de sortie du deuxième groupe (II).

13. Transmission selon la revendication 12,
**caractérisée en ce que** le quatrième groupe (IV) présente des éléments de changement de vitesse et de transmission (39) pour la commutation d'une traction avant.
